# EUROPEAN PATENT SPECIFICATION

(11) **EP 1 862 492 B1**
(45) Date of publication and mention of the grant of the patent: **26.10.2011**
(21) Application number: 06011130.9
(22) Date of filing: 30.05.2006
(51) Int. Cl.: C08J 3/22, C08K 3/24, C08K 5/00, C08K 5/09, C08K 5/42, C08K 5/541, C08K 5/5415, C08K 5/5419, C08L 23/08, C08L 23/14, C08L 23/16, C08L 43/04

(54) **Use of a silicon containing compound as processing aid and as a surface smoothening agent in a polyolefin composition comprising crosslinkable polyolefin with silane groups and a silanol condensation catalyst**
Verwendung einer Siliziumverbindung als Verarbeitungshilfsmittel und als oberflächenglättendes Additiv in Polyolefinzusammensetzung enthaltend vernetzbares Polyolefin mit Silangruppen und einen Silanol-Kondensationskatalysator
Utilisation d' un composé de silicium comme auxiliaire de traitement et comme agent de lissage de surface dans une composition de polyoléfine comprenant une polyoléfine réticulable ayant des groupes silanes et un catalyseur de condensation de silanol

(43) Date of publication of application: 05.12.2007
(73) Proprietor: Borealis Technology Oy, 06101 Porvoo (FI)
(72) Inventor: Carlsson, Roger, 423 70 Säve (SE); Fagrell, Ola, 444 45 Stenungsund (SE); Sultan, Bernt-Ake, 444 42 Stenungsund (SE)
(74) Representative: Kador & Partner

(56) References cited:
- WO-A-00/36612
- US-A- 3 100 753
- US-A- 5 081 171
- US-B1- 6 342 552

## Description

The present invention relates to the use of a silicon-containing compound in a polyolefin composition comprising a crosslinkable polyolefin with hydrolysable silane groups and a silanol condensation catalyst as processing aid and/or surface smoothening aid.

It is known to cross-link polyolefins by means of additives as this improves the properties of the polyolefin such as mechanical strength and chemical heat resistance. Cross-linking may be performed by condensation of silanol groups contained in the polyolefin which can be obtained by hydrolysation of silane groups. A silane compound can be introduced as a cross-linkable group e.g. by grafting the silane compound onto a polyolefin, or by copolymerisation of olefin monomers and silane group containing monomers. Such techniques are known e.g. from US 4,413,066, US 4.297,310, US 4,351,876, US 4,397,981, US 4,446,283 and US 4,456,704.

For cross-linking of such polyolefins, a silanol condensation catalyst must be used. Conventional catalysts are for example tin-organic compounds such as dibutyl tin dilaurate (DBTDL). It is further known that the cross-linking process advantageously is carried out in the presence of acidic silanol condensation catalysts. In contrast to the conventional tin-organic catalysts the acidic catalysts allow cross-linking to quickly take place already at room temperature. Such acidic silanol condensation catalysts are disclosed for example in WO 95/17463. The contents of this document is enclosed herein by reference.

In order to obtain a homogeneous end-product, it is important that a very good mixing of the components of the polyolefin composition is obtained, including a very good dispersion of the silanol condensation catalyst in the polymer matrix. Furthermore, also a high throughput in the processing step, e.g. a high output of an extruder in which the composition is extruded, is desired.

When compounding the polyolefin composition e.g. by extrusion, it is known that mixing, and hence dispersion of the silanol condensation catalyst, can be improved by higher energy input into the extruder. Of course, also a higher output of the extruder requires higher energy input into the extruder. However, due to an increase of temperature of the polyolefin composition created by friction the amount of energy input and hence the output of the extruder is limited, because usually the polyolefin composition starts degrading at a temperature of about 200 °C. It would thus be desirable to have a polyolefin composition allowing for higher energy input into an extruder and hence higher output of the extruder, at lower temperatures thus avoiding degradation of the polyolefin.

Furthermore, in order to avoid degradation of the polyolefin as far as possible and to maximise extruder output, it is also desirable that the composition remains in the extruder as short as possible, i.e. it is desirably to decrease the retention time in the extruder.

Finally, for many applications, such as semiconductive layers in medium or high voltage cables, a high surface quality, including surface smoothness, of the extruded polyolefin composition is required.

It is hence an object of the present invention to provide the use of an additive for a polyolefin composition comprising a polyolefin with hydrolysable silane groups and a silanol condensation catalyst, with improved processing properties, in particular with lower extrusion temperature and higher throughput upon extrusion, decreased retention time in the extruder, and with improved surface quality after extrusion.

It has now surprisingly been found that a silicon containing compound (c) can be used in a polyolefin with hydrolysable silane groups and a silanol condensation catalyst as a processing aid and as a surface smoothening agent.

The present application therefore discloses a polyolefin composition comprising
(i) a crosslinkable polyolefin with hydrolysable silane groups (A),
(ii) a Brönsted acid (B) as a silanol condensation catalyst, and
(iii) a silicon containing compound (C) according to the formula

   (R¹)ₓ[Si(R²)_{y}(R³)_{z}]ₘ (I)

   wherein
   R¹, which may be the same or different if more than one such group is present, is a monofunctional, or, if m = 2, is a bifunctional, hydrocarbyl residue comprising from 1 to 100 carbon atoms;
   R², which may be the same or different if more than one such group is present, is a hydrocarbyloxy residue comprising from 1 to 100 carbon atoms;
   R³, is -R⁴SiR¹ₚR²_{q}, wherein
   p is 0 to 3, preferably 0 to 2,
   q is 0 to 3, preferably 1 to 3,
   with the proviso that p + q is 3, and
   R⁴ is -(CH₂)ᵣYₛ(CH₂)ₜ- where r and t independently are 1 to 3, s is 0 or 1 and Y is a difunctional heteroatomic group selected from -O-, -S-, -SO-, -SO₂-, -NH-, -NR¹- or -PR¹-, where R¹ and R² are as previously defined; and
   x is 0 to 3, y is 1 to 4, z is 0 or 1, with the proviso that x+y+z=4;
   and m = 1 or 2.

The composition according to the invention has an improved processing behaviour because it enables extrusion of the composition at significantly decreased temperature and, at the same time, with very good dispersion and high output. Thus, much longer production campaigns are possible with the present composition.

Furthermore, the composition in the extruder behaves very similar to an thermoplastic material upon extrusion, i.e. there is virtually no drop in melt flow rate upon extrusion, and the retention time in the extruder is significantly decreased, thus proving again the excellent processing properties of the composition.

Still further, the composition after extrusion has a very good surface quality, e.g. surface smoothness and low gels content. In particular, the high surface quality is obtained also immediately upon extrusion of new material of the composition, after the extruder has been stopped for a certain time, e.g. for tool change.

Preferably, the silicon containing compound (C) has a high compatibility with the polymer composition of the invention which means that even after treatment of the composition at elevated temperature for several hours the major part of the silicon containing compound (C) does not volatise from the composition. The compatibility of compound (C) can be adjusted by appropriate selection of, especially, group R¹, which should be chosen sufficiently large and non-polar.

More particularly, the silicon containing compound (C), preferably, is compatible with the composition insofar as it, when having been present in the composition in an initial amount corresponding to 0.060 mole hydrolysable groups per 1000 g composition, after a storage at 60 °C for 74 h in air is still present in the composition at least in an amount corresponding to 0.035 mole hydrolysable groups per 1000 g composition.

Furthermore, preferably, in formula (I) for compound (C):
R¹, which may be the same or different if more than one such group is present, is an alkyl, arylalkyl, alkylaryl or aryl group containing 1 to 40 carbon atoms, with the proviso that if more than one R¹ group is present the total number of carbon atoms of the R¹ groups is at most 60,
and more preferably:
R¹, which may be the same or different if more than one such group is present, is a linear or branched C₆- to C₂₂-alkyl, still more preferably is a C₈- to C₂₀-alkyl group.

Furthermore, preferably in formula (I) for compound (C):
R², which may be the same or different if more than one such group is present, is an alkoxy, aryloxy, alkylaryloxy, or arylalkyloxy group containing 1 to 15 carbon atoms, with the proviso that if more than one R² group is present the total number of carbon atoms in the alkyl moieties of the R² groups is at most 40,
more preferably:
R², which may be the same or different if more than one such group is present, is a linear or branched C₁- to C₁₀-alkoxy, still more preferably is a C₁- to C₈-alkoxy, still more preferably is a C₁- to C₄-alkoxy, and most preferably is a methoxy, ethoxy, propoxy, or 1-butoxy group.

The alkyl moieties of R¹ and R² may be linear or branched.

R¹ and R² may comprise heteroatom substituents, however, preferably R¹ and R² are free of any heteroatom substituents.

Preferably, in formula (I) for compound (C) x = 1.

Furthermore, preferably in formula (I) y = 3.

Still further, preferably in formula (I) z = 0.

Finally, preferably in formula (I) m = 1.

Preferred compounds (C) are also all those compounds which are combinations of any of the above-mentioned preferred embodiments for any of the parameters of formula (I).

In a particularly preferred embodiment, compound (C) comprises, more preferably consists of, hexadecyl trimethoxy silane.

The polyolefin composition of the invention preferably comprises compound (C) in an amount of from 0.001 to 3 wt% of the total composition, more preferably in an amount of from 0.01 to 2.5 wt% of the total composition.

The silanol condensation catalysts (B) of the polyolefin composition is a Brönsted acid, i.e. is a substance which acts as a proton donor.

Such Brönsted acids may comprise inorganic acids such as sulphuric acid and hydrochloric acid, and organic acids such as citric acid, stearic acid, acetic acid, sulphonic acid and alkanoic acids as dodecanoic acid, or a precursor of any of the compounds mentioned.

Preferably, the Brönsted acid is a sulphonic acid, more preferably an organic sulphonic acid.

Still more preferably, the Brönsted acid is an organic sulphonic acid comprising 10 C-atoms or more, more preferably 12 C-atoms or more, and most preferably 14 C-atoms or more, the sulphonic acid further comprising at least one aromatic group which may e.g. be a benzene, naphthalene, phenantrene or anthracene group. In the organic sulphonic acid, one, two or more sulphonic acid groups may be present, and the sulphonic acid group(s) may either be attached to a non-aromatic, or preferably to an aromatic group, of the organic sulphonic acid.

Further preferred, the aromatic organic sulphonic acid comprises the structural element:

Ar(SO₃H)ₓ (II)

with Ar being an aryl group which may be substituted or non- substituted, and x being at least 1.

The organic aromatic sulphonic acid silanol condensation catalyst may comprise the structural unit according to formula (II) one or several times, e.g. two or three times. For example, two structural units according to formula (II) may be linked to each other via a bridging group such as an alkylene group.

Preferably, Ar is a aryl group which is substituted with at least one C₄- to C₃₀-hydrocarbyl group, more preferably C₄- to C₃₀-alkyl group.

Aryl group Ar preferably is a phenyl group, a naphthalene group or an aromatic group comprising three fused rings such as phenantrene and anthracene.

Preferably, in formula (II) x is 1, 2 or 3, and more preferably x is 1 or 2.

Furthermore, preferably the compound used as organic aromatic sulphonic acid silanol condensation catalyst has from 10 to 200 C-atoms, more preferably from 14 to 100 C-atoms.

In one preferred embodiment, Ar is a hydrocarbyl substituted aryl group and the total compound containing 14 to 28 carbon atoms, and still further preferred, the Ar group is a hydrocarbyl substituted benzene or naphthalene ring, the hydrocarbyl radical or radicals containing 8 to 20 carbon atoms in the benzene case and 4 to 18 atoms in the naphthalene case.

It is further preferred that the hydrocarbyl radical is an alkyl substituent having 10 to 18 carbon atoms and still more preferred that the alkyl substituent contains 12 carbon atoms and is selected from dodecyl and tetrapropyl. Due to commercial availability it is most preferred that the aryl group is a benzene substituted group with an alkyl substituent containing 12 carbon atoms.

The currently most preferred compounds are dodecyl benzene sulphonic acid and tetrapropyl benzene sulphonic acid.

The silanol condensation catalyst may also be precursor of the sulphonic acid compound, including all its preferred embodiments mentioned, i.e. a compound that is converted by hydrolysis to such a compound. Such a precursor is for example the acid anhydride of a sulphonic acid compound, or a sulphonic acid that has been provided with a hydrolysable protective group, as e.g. an acetyl group, which can be removed by hydrolysis.

In a second preferred embodiment, the sulphonic acid catalyst is selected from those as described in EP 1 309 631 and EP 1 309 632, namely
a) a compound selected from the group of
   (i) an alkylated naphthalene monosulfonic acid substituted with 1 to 4 alkyl groups wherein each alkyl group is a linear or branched alkyl with 5 to 40 carbons with each alkyl group being the same or different and wherein the total number of carbons in the alkyl groups is in the range of 20 to 80 carbons;
   (ii) an arylalkyl sulfonic acid wherein the aryl is phenyl or naphthyl and is substituted with 1 to 4 alkyl groups wherein each alkyl group is a linear or branched alkyl with 5 to 40 carbons with each alkyl group being the same or different and wherein the total number of carbons in the alkyl groups is in the range of 12 to 80;
   (iii) a derivative of (i) or (ii) selected from the group consisting of an anhydride, an ester, an acetylate, an epoxy blocked ester and an amine salt thereof which is hydrolysable to the corresponding alkyl naphthalene monosulfonic acid or the arylalkyl sulfonic acid;
   (iv) a metal salt of (i) or (ii) wherein the metal ion is selected from the group consisting of copper, aluminium, tin and zinc; and
b) a compound selected from the group of
   (i) an alkylated aryl disulfonic acid selected from the group consisting of the structure (III): 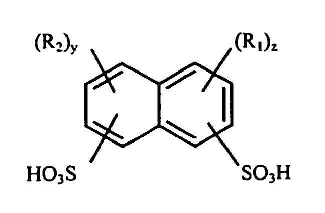 and the structure (IV): 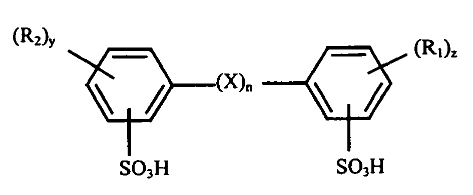 wherein each of R₁ and R₂ is the same or different and is a linear or branched alkyl group with 6 to 16 carbons, y is 0 to 3, z is 0 to 3 with the proviso that y + z is 1 to 4, n is 0 to 3, X is a divalent moiety selected from the group consisting of -C(R₃)(R₄)-, wherein each of R₃ and R₄ is H or independently a linear or branched alkyl group of 1 to 4 carbons and n is 1; -C(=O)-, wherein n is 1; -S-, wherein n is 1 to 3 and -S(O)₂-, wherein n is 1; and
   (ii) a derivative of (i) selected from the group consisting of the anhydrides, esters, epoxy blocked sulfonic acid esters, acetylates, and amine salts thereof which is a hydrolysable to the alkylated aryl disulfonic acid,
together with all preferred embodiments of those sulphonic acids as described in the mentioned European Patents.

Preferably, in the polyolefin composition according to the invention the silanol condensation catalyst is present in an amount of 0.0001 to 6 wt%, more preferably of 0.001 to 2 wt%, and most preferably 0.02 to 0.5 wt%.

The composition of the present invention comprises a cross-linkable polyolefin containing hydrolysable silane groups (A). More preferably the cross-linkable polyolefin comprises, still more preferably consists of, a polyethylene containing hydrolysable silane groups.

The hydrolysable silane groups may be introduced into the polyolefin by copolymerisation of e.g. ethylene monomers with silane group containing comonomers or by grafting, i.e. by chemical modification of the polymer by addition of silane groups mostly in a radical reaction. Both techniques are well known in the art.

Preferably, the silane group containing polyolefin has been obtained by copolymerisation. In the case of polyolefins, preferably polyethylene, the copolymerisation is preferably carried out with an unsaturated silane compound represented by the formula

R¹SiR²_{q}Y_{3-q} (V)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R² , if present, is a methyl, ethyl, propyl, decyl or phenyl group.

A preferred unsaturated silane compound is represented by the formula

CH₂=CHSi(OA)₃ (VI)

wherein A is a hydrocarbyl group having 1-8 carbon atoms, preferably 1-4 carbon atoms.

The most preferred compounds are vinyl trimethoxysilane, vinyl bismethoxyethoxysilane, vinyl triethoxysilane, gamma-(meth)acryloxypropyltrimethoxysilane, gamma(meth)acryloxypropyltriethoxysilane, and vinyl triacetoxysilane.

The copolymerisation of the olefin, e.g. ethylene, and the unsaturated silane compound may be carried out under any suitable conditions resulting in the copolymerisation of the two monomers.

Moreover, the copolymerisation may be implemented in the presence of one or more other comonomers which can be copolymerised with the two monomers. Such comonomers include (a) vinyl carboxylate esters, such as vinyl acetate and vinyl pivalate, (b) alpha-olefins, such as propene, 1-butene, 1-hexane, 1-octene and 4-methyl-1-pentene, (c) (meth)acrylates, such as methyl(meth)acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-ethyl styrene.

Amongst these comonomers, vinyl esters of monocarboxylic acids having 1-4 carbon atoms, such as vinyl acetate, and (meth)acrylate of alcohols having 1-4 carbon atoms, such as methyl(meth)-acrylate, are preferred.

Especially preferred comonomers are butyl acrylate, ethyl acrylate and methyl acrylate.

Two or more such olefinically unsaturated compounds may be used in combination. The term "(meth)acrylic acid" is intended to embrace both acrylic acid and methacrylic acid. The comonomer content of the copolymer may amount to 70 wt% of the copolymer, preferably about 0.5 to 35 wt%, most preferably about 1 to 30 wt%.

If using a graft polymer, this may have been produced e.g. by any of the two methods described in US 3,646,155 and US 4,117,195, respectively.

The silane group containing polyolefin (A) preferably contains 0.001 to 15 wt% of the silane compound, more preferably 0.01 to 5 wt%, most preferably 0.1 to 2 wt%.

The polyolefin composition according to the invention when extruded exhibits almost thermoplastic behaviour. This means, inter alia, that the melt flow rate of composition does not significantly drop upon extrusion even at comparatively high temperatures.

Therefore, preferably the polyolefin composition has a MFR₂₁ (190 °C, 21.6 kg) of 50 g/10 min or more, more preferably 60 g/10 min or more, and most preferably 70 g/10 min or more when extruded at any temperature in the range of from 20 to 240 °C.

Furthermore, it is preferred that the MFR₂₁ (190 °C, 21.6 kg) of the composition when extruded at any temperature in the range of from 140 to 240 °C is 90 % or more, more preferably 95 % or more, of the MFR₂₁ (190 °C, 21.6 kg) of the same composition extruded without silanol condensation catalyst.

The polymer composition according to the invention may further contain various additives, such as miscible thermoplastics, antioxidants, further stabilizers, lubricants, fillers, colouring agents and foaming agents.

As antioxidant, preferably a compound, or a mixture of such compounds, is used which is neutral or acidic, must comprise a sterically hindered phenol group or aliphatic sulphur groups. Such compounds are disclosed in EP 1 254 923 to be particularly suitable antioxidants for stabilisation of polyolefins containing hydrolysable silane groups which are crosslinked with a silanol condensation catalyst, in particular an acidic silanol condensation catalyst. Other preferred antioxidants are disclosed in WO2005003199A1.

Preferably, the antioxidant is present in the composition in an amount of from 0.01 to 3 wt%, more preferably 0.05 to 2 wt%, and most preferably 0.08 to 1.5 wt%.

The silanol condensation catalyst usually is added to the silane group containing polyolefin by compounding the polymer with a so-called master batch, in which the catalyst, and optionally further additives are contained in a polymer, e.g. polyolefin, matrix in concentrated form.

The silanol condensation catalyst (B) and the silicon containing compound (C) are preferably added to the silane group containing polyolefin by compounding a master batch, which contains the silanol condensation catalyst and component (C) in a polymer matrix in concentrated form, with the silane group containing polyolefin.

Accordingly, the present application also discloses to a master batch for a crosslinkable polyolefin composition comprising a matrix polymer, a silanol condensation catalyst (B) in any of the above described embodiments, and silicon containing compound (C) in any of the above described embodiments.

The matrix polymer is preferably a polyolefin, more preferably a polyethylene, which may be a homo- or copolymer of ethylene, e.g. low density polyethylene, or polyethylene-methyl-ethyl-butyl-acrylate copolymer containing 1 to 50 wt% of the acrylate, and mixtures thereof.

As stated, in the master batch the compounds to be added to the silane group containing polyolefin are contained in concentrated form, i.e. in a much higher amount than in the final composition.

The master batch preferably comprises component (B) in an amount of from 0.3 to 6 wt%, more preferably from 0.7 to 3.5 wt%.

Component (C) preferably is present in the master batch in an amount of from 1 to 20 wt%, more preferably from 2 to 10 wt%.

The master batch preferably is processed with the silane group containing polymer in an amount of from 1 to 10 wt%, more preferably from 2 to 8 wt%.

Compounding may be performed by any known compounding process, including extruding the final product with a screw extruder or a kneader.

The present application furthermore discloses to a process for producing an article comprising extrusion of a polyolefin composition in any of the above described embodiments at a temperature in the range of 140 to 280 °C.

The invention also relates to an article, preferably a wire or cable, comprising the polyolefin composition in any of the above described embodiments.

Furthermore, the application discloses the use of the polyolefin composition in any of the above described embodiments for the production of an article, in particular a wire or cable.

The invention relates to the use of a silicon containing compound (C) in any of the above described embodiments as a processing aid which reduces the retention time of a composition comprising a polyolefin comprising hydrolysable silane groups and a Brönsted acid as a silanol condensation catalyst in the extruder and/or reduces the extrusion temperature in the extrusion of said composition.

Finally, the invention also relates to the use of a silicon containing compound (C) in any of the above described embodiments as a surface smoothening agent in a composition comprising a polyolefin comprising hydrolysable silane groups and a Brönsted acid as a silanol condensation catalyst.

The following examples serve to further illustrate the present invention.

### Examples

### 1. Measurement Methods

### a) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C and may be determined at different loadings such as 2.16 kg (MFR₂) or 21.6 kg (MFR₂₁).

### 2. Compositions Produced

### a) Master batches

Master batches were produced comprising:
- a matrix resin: an ethylene butylacrylate copolymer with 17 wt% butylacrylate a density of 924 kg/m³ and a MFR₂ of 7.0 g/10 min (OE6417 available from Borealis);
- a silanol condensation catalyst: linear dodecylbenzene sulphonic acid (DDBSA) has been used; or dibutyl tin dilaurate (DBTL) as a conventional silanol condensation catalyst;
- a silicon containing compound: hexadecyl trimethoxy silane (HDTMS),
- an antioxidant: 4-methyl-phenol reaction products with dicyclopentadiene and isobutylene (Ralox LC, CAS-no. 68610-51-5).

The components were used in the master batches in the amounts as indicated in Table 1. Compounding of the master batches was performed using a Brabender kneader (small chamber, 47 cm³), and 3 mm thick plates were compression moulded at 180 °C.

**Table 1:**

| | Example 1 | Comparative Example 1 | Comparative Example 2 | Comparative Example 3 |
|---|---|---|---|---|
| Matrix | 88.5 | 92.5 | 90 | 87 |
| Sulphonic acid | 1.5 | 1.5 | - | - |
| DBTL | - | - | - | 3 |
| HDTMS | 4 | - | 4 | 4 |
| Antioxidant | 6 | 6 | 6 | 6 |

### b) Compositions

The master batches of Table 1 were processed in an amount of 5 wt% with 95 wt% of a silane group containing polyethylene having a density of 923 kg/m³, a MFR₂ of 0.9 g/10 min and a silane copolymer content of 1.3 wt% in a Brabender kneader followed by tape extrusion.

### c) Retention Time

Retention time in the extruder was measured by adding a black coloured pellet into the inlet of the extruder during extruding the colourless compositions of example 1 and Comparative Example 1. Then, the time period (T₁) between introduction of the black pellet at the extruder inlet and the appearance of black coloured polymer at the outlet of the extruder was measured, and the time period (T₂) between introduction of the black pellet at the extruder inlet and the total disappearance of black coloured polymer at the outlet of the extruder. The total retention time was then determined by the difference of T₂ and T₁. The results of the experiments are given in Table 2:

**Table 2:**

| | Example 1 | Comparative Example 1 |
|---|---|---|
| T₁ | 2 min 35 sec | 2 min 55 sec |
| T₂ | 3 min 55 sec | 5 min 30 sec |
| Retention time (T₂ - T₁) | 1 min 20 sec | 3 min 35 sec |

### Example 1 according to the invention has a significantly shorter retention time in relation to Comparative Example 1.

### d) Melt Flow Rate as Function of Temperature

The MFR₂₁ (190 °C, 21.6 kg) of the compositions of Example 1 and Comparative Examples 2 to 4 was measured before extrusion. Then, on a 60 mm Troester cable extruder with a PE screw having a compression ratio of 1 : 3.6, the material was extruded onto floor at different temperature settings. For each temperature setting the melt temperature was measured and samples collected. Directly after extrusion the MFR₂₁ was measured. The results are given in Table 3:

**Table 3:**

| | Before extrusion | After extrusion | | | | | |
|---|---|---|---|---|---|---|---|
| Melt temperature/°C | | 150 | 170 | 190 | 210 | 225 | 240 |
| Example 1 | 74 | 74 | 74 | 73 | 72 | 69 | 69 |
| Comparative Example 2 | 74 | 74 | 74 | 74 | 72 | 69 | 69 |
| Comparative Example 3 | 74 | 50 | 48 | 45 | 45 | 45 | 34 |

Example 1 is according to the invention. The comparison with Comparative Example 2 shows that the composition according to the invention behaves like a thermoplastic resin. Thus, no crosslinking occurs in the extruder, which can be seen in the constant MFR₂₁ level. Comparative Example 3 shows a composition which uses DBTL as a silanol condensation catalyst containing HDTMS demonstrating inferior behaviour as can be seen in the lowered MFR₂₁. Therefore, a combination of the right crosslinking catalyst and the processing aid according to the invention gives the best performance.

### e) Tape Surface

The compositions of Example 1, and Comparative Examples 1 and 2 were extruded in a Brabender tape extruder with a tape forming die having a melt temperature of 210 °C for 10 min. A 4 : 1 compression was used, and the heat was adjusted to 160 °C, 180 °C and 210 °C for the different zones of the extruder. Water cooling was used on the feeding zone. The rotation speed was 30 rpm. Extrusion initially took place for 30 min.

To simulate time for tool changes, the extruder was stopped for the time indicated in Table 4. The extruder was then started again and after 30 min a tape sample for inspection was collected.

The tapes produced were visually inspected and the surface quality was rated according to the amount of gels counted, haziness and irregularities of the tape. In the rating, the numbers mean: 5 is good (the tape has no gels, perfect finish, no irregular shaped edges, thin and transparent look), 3 is acceptable to be used for commercial production (there are a number of small gels, the tape is somewhat hazy but still the edges of the tape is perfect), and below 3 is not acceptable for commercial use (there are significant amount of small gels and or some larger ones >1mm).

The results are given in Table 4

**Table 4:**

| Extruder stop time (min) | 0 | 5 | 10 | 15 | 30 | 60 |
|---|---|---|---|---|---|---|
| Example 1 | 5 | 5 | 5 | 5 | 5 | 2 |
| Comparative Example 1 | 1 | 1 | 1 | 1 | 1 | 1 |
| Comparative Example 2 | 5 | 5 | 5 | 5 | 5 | 2 |
| Comparative Example 3 | 5 | 5 | 5 | 3 | 1 | 1 |

Example 1 is according to the invention and has excellent scorch tape rating after extrusion stops up to 30 minutes. Comparative Example 1 shows a non extricable composition since it is full of gels. Comparative Example 2 shows a thermoplastic behaviour which is similar to Example 1. Comparative Example 3 shows an inferior behaviour compared to the composition according to the invention. Therefore, a combination of the right crosslinking catalyst and the processing aid according to the invention gives the best performance.

## Claims

1. Use of a silicon containing compound (C) according to the formula
(R¹)ₓ[Si(R²)_{y}(R³)_{z}]ₘ (I)
wherein
R¹, which may be the same or different if more than one such group is present, is a monofunctional, or, if m = 2, is a bifunctional, hydrocarbyl residue comprising from 1 to 100 carbon atoms;
R², which may be the same or different if more than one such group is present, is a hydrocarbyloxy residue comprising from 1 to 100 carbon atoms;
R³, is R⁴SiR¹ₚR²_{q}, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a bifunctional heteroatomic group selected from -O-, -S-, -SO, -SO₂-, -NH-, -NR¹- or -PR¹-, where R¹ and R² are as previously defined; and
x is 0 to 3, y is 1 to 4, z is 0 or 1, with the proviso that x + y + z = 4; and m = 1 or 2
as a processing aid in the extrusion of a composition comprising a polyolefin comprising hydrolysable silane groups and a Brönsted acid as a silanol condensation catalyst which reduces the retention time of the composition in the extruder.

2. Use of a silicon containing compound (C) according to the formula
(R¹)ₓ[Si(R²)_{y}(R³)_{z}]ₘ (I)
wherein
R¹, which may be the same or different if more than one such group is present, is a monofunctional, or, if m = 2, is a bifunctional, hydrocarbyl residue comprising from 1 to 100 carbon atoms;
R², which may be the same or different if more than one such group is present, is a hydrocarbyloxy residue comprising from 1 to 100 carbon atoms;
R³, is R⁴SiR¹ₚR²_{q}, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a bifunctional heteroatomic group selected from -O-, -S-, -SO, -SO₂-, -NH-, -NR¹- or -PR¹-, where R¹ and R² are as previously defined; and
x is 0 to 3, y is 1 to 4, z is 0 or 1, with the proviso that x + y + z = 4; and m = 1 or 2
as a processing aid in the extrusion of a composition comprising a polyolefin comprising hydrolysable silane groups and a Brönsted acid as a silanol condensation catalyst which reduces extrusion temperature.

3. Use of a silicon containing compound (C) according to the formula
(R¹)ₓ[Si(R²)_{y}(R³)_{z}]ₘ (I)
wherein
R¹, which may be the same or different if more than one such group is present, is a monofunctional, or, if m = 2, is a bifunctional, hydrocarbyl residue comprising from 1 to 100 carbon atoms;
R², which may be the same or different if more than one such group is present, is a hydrocarbyloxy residue comprising from 1 to 100 carbon atoms;
R³, is R⁴SiR¹ₚR²_{q}, wherein
p is 0 to 3,
q is 0 to 3,
with the proviso that p + q is 3, and
R⁴ is -(CH₂)ᵣYₛ(CH₂)ₜ- where r and t independently are 1 to 3, s is 0 or 1 and Y is a bifunctional heteroatomic group selected from -O-, -S-, -SO, -SO₂-, -NH-, -NR¹- or -PR¹-, where R¹ and R² are as previously defined; and
x is 0 to 3, y is 1 to 4, z is 0 or 1, with the proviso that x + y + z = 4; and m = 1 or 2
as a surface smoothening agent in a composition comprising a polyolefin comprising hydrolysable silane groups and a Brönsted acid as a silanol condensation catalyst.

## Patentansprüche

1. Verwendung einer siliciumhaltigen Verbindung (C) gemäß der Formel
(R¹)ₓ[Si(R²)_{y}(R³)_{z}]ₘ (I)
worin
R¹, das gleich oder verschieden sein kann, wenn mehr als ein derartiger Rest vorliegt, ein monofunktioneller, oder wenn m = 2 ist, ein bifunktioneller, Kohlenwasserstoffrest mit 1 bis 100 Kohlenstoffatomen ist;
R², das gleich oder verschieden sein kann, wenn mehr als ein derartiger Rest vorliegt, ein Hydrocarbyloxyrest mit 1 bis 100 Kohlenstoffatomen ist;
R³ gleich -R⁴SiR¹ₚR²_{q} ist, wobei
p gleich 0 bis 3 ist,
q gleich 0 bis 3 ist,
mit der Maßgabe, daß p + q gleich 3 ist, und
R⁴ gleich -(CH₂)ᵣYₛ(CH₂)ₜ- ist, wobei r und t unabhängig voneinander 1 bis 3 sind, s gleich 0 oder 1 ist und Y ein bifunktioneller heteroaromatischer Rest ist, der aus -O-, -S-, -SO-, -SO₂-, -NH-, -NR¹- oder -PR¹- ausgewählt ist,
wobei R¹ und R² wie bereits angegeben sind; und
x gleich 0 bis 3 ist, y gleich 1 bis 4 ist, z gleich 0 oder 1 ist, mit der Maßgabe, daß x + y + z = 4 ist; und m = 1 oder 2 ist;
als Verarbeitungshilfsmittel beim Extrudieren einer Zusammensetzung, die ein Polyolefin umfaßt, das hydrolysierbare Silangruppen und eine Brönsted-Säure als Silanolkondensationskatalysator umfaßt, das die Verweilzeit der Zusammensetzung im Extruder verringert.

2. Verwendung einer siliciumhaltigen Verbindung (C) gemäß der Formel
(R¹)ₓ[Si(R²)_{y}(R³)_{z}]ₘ (I)
worin
R¹, das gleich oder verschieden sein kann, wenn mehr als ein derartiger Rest vorliegt, ein monofunktioneller, oder wenn m = 2 ist, ein bifunktioneller, Kohlenwasserstoffrest mit 1 bis 100 Kohlenstoffatomen ist;
R², das gleich oder verschieden sein kann, wenn mehr als ein derartiger Rest vorliegt, ein Hydrocarbyloxyrest mit 1 bis 100 Kohlenstoffatomen ist;
R³ gleich -R⁴SiR¹ₚR²_{q} ist, wobei
p gleich 0 bis 3 ist,
q gleich 0 bis 3 ist,
mit der Maßgabe, daß p + q gleich 3 ist, und
R⁴ gleich -(CH₂)ᵣYₛ(CH₂)ₜ- ist, wobei r und t unabhängig voneinander 1 bis 3 sind, s gleich 0 oder 1 ist und Y ein bifunktioneller heteroaromatischer Rest ist, der aus -O-, -S-, -SO-, -SO₂-, -NH-, -NR¹- oder -PR¹- ausgewählt ist,
wobei R¹ und R² wie bereits angegeben sind; und
x gleich 0 bis 3 ist, y gleich 1 bis 4 ist, z gleich 0 oder 1 ist, mit der Maßgabe, daß x + y + z = 4 ist; und m = 1 oder 2 ist;
als Verarbeitungshilfsmittel beim Extrudieren einer Zusammensetzung, die ein Polyolefin umfaßt, das hydrolysierbare Silangruppen und eine Brönsted-Säure als Silanolkondensationskatalysator umfaßt, das die Extrusionstemperatur verringert.

3. Verwendung einer siliciumhaltigen Verbindung (C) gemäß der Formel
(R¹)ₓ[Si(R²)_{y}(R³)_{z}]ₘ (I)
worin
R¹, das gleich oder verschieden sein kann, wenn mehr als ein derartiger Rest vorliegt, ein monofunktioneller, oder wenn m = 2 ist, ein bifunktioneller, Kohlenwasserstoffrest mit 1 bis 100 Kohlenstoffatomen ist;
R², das gleich oder verschieden sein kann, wenn mehr als ein derartiger Rest vorliegt, ein Hydrocarbyloxyrest mit 1 bis 100 Kohlenstoffatomen ist;
R³ gleich -R⁴SiR¹ₚR²_{q} ist, wobei
p gleich 0 bis 3 ist,
q gleich 0 bis 3 ist,
mit der Maßgabe, daß p + q gleich 3 ist, und
R⁴ gleich -(CH₂)ᵣYₛ(CH₂)ₜ- ist, wobei r und t unabhängig voneinander 1 bis 3 sind, s gleich 0 oder 1 ist und Y ein bifunktioneller heteroaromatischer Rest ist, der aus -O-, -S-, -SO-, -SO₂-, -NH-, -NR¹- oder -PR¹- ausgewählt ist,
wobei R¹ und R² wie bereits angegeben sind; und
x gleich 0 bis 3 ist, y gleich 1 bis 4 ist, z gleich 0 oder 1 ist, mit der Maßgabe, daß x + y + z = 4 ist; und m = 1 oder 2 ist;
als Oberflächenglättungsmittel in einer Zusammensetzung, die ein Polyolefin umfaßt, das hydrolysierbare Silangruppen und eine Brönsted-Säure als Silanolkondensationskatalysator umfaßt.

## Revendications

1. Utilisation d'un composé contenant du silicium (C) selon la formule
(R¹)ₓ[Si(R²)_{y}(R³)_{z}]ₘ (I)
où
R¹, qui peut être identique ou différent si plus d'un tel groupe est présent, est un résidu hydrocarbyle monofonctionnel, ou, si m = 2, est un résidu hydrocarbyle bifonctionnel, comprenant de 1 à 100 atomes de carbone ;
R², qui peut être identique ou différent si plus d'un tel groupe est présent, est un résidu hydrocarbyloxy comprenant de 1 à 100 atomes de carbone ;
R³, est R⁴SiR¹ₚR²_{q}, où
p est égal à 0 à 3,
q est égal à 0 à 3,
à la condition que p + q est égal à 3, et
R⁴ est -(CH₂)ᵣYₛ(CH₂)ₜ- où r et t sont indépendamment égaux à 1 à 3, s est égal à 0 ou 1 et Y est un groupe hétéroatomique bifonctionnel choisi parmi -O-, -S-, -SO-, -SO₂-, -NH-, -NR¹- ou -PR¹-, où R¹ et R² sont tels que définis précédemment ; et
x est égal à 0 à 3, y est égal à 1 à 4, z est égal à 0 ou 1, à la condition que x + y
+ z = 4; et m = 1 ou 2
en tant qu'un adjuvant de fabrication dans l'extrusion d'une composition comprenant une polyoléfine comprenant des groupes silanes hydrolysables et un acide de Brönsted en tant qu'un catalyseur de condensation au silanol qui réduit le temps de rétention de la composition dans l'extrudeuse.

2. Utilisation d'un composé contenant du silicium (C) selon la formule
(R¹)ₓ[Si(R²)_{y}(R³)_{z}]ₘ (I)
où
R¹, qui peut être identique ou différent si plus d'un tel groupe est présent, est un résidu hydrocarbyle monofonctionnel, ou, si m = 2, est un résidu hydrocarbyle bifonctionnel, comprenant de 1 à 100 atomes de carbone ;
R², qui peut être identique ou différent si plus d'un tel groupe est présent, est un résidu hydrocarbyloxy comprenant de 1 à 100 atomes de carbone ;
R³, est R⁴SiR¹ₚR²_{q}, où
p est égal à 0 à 3,
q est égal à 0 à 3,
à la condition que p + q est égal à 3, et
R⁴ est -(CH₂)ᵣYₛ(CH₂)ₜ- où r et t sont indépendamment égaux à 1 à 3, s est égal à 0 ou 1 et Y est un groupe hétéroatomique bifonctionnel choisi parmi -O-, -S-, -SO-, -SO₂-, -NH-, -NR¹- ou -R¹-, où R¹ et R² sont tels que définis précédemment ; et
x est égal à 0 à 3, y est égal à 1 à 4, z est égal à 0 ou 1, à la condition que x + y
+ z = 4; et m = 1 ou 2
en tant qu'un adjuvant de fabrication dans l'extrusion d'une composition comprenant une polyoléfine comprenant des groupes silanes hydrolysables et un acide de Brönsted en tant qu'un catalyseur de condensation au silanol qui réduit la température d'extrusion.

3. Utilisation d'un composé contenant du silicium (C) selon la formule
(R¹)ₓ[Si(R²)_{y}(R³)_{z}]ₘ (I)
où
R¹, qui peut être identique ou différent si plus d'un tel groupe est présent, est un résidu hydrocarbyle monofonctionnel, ou, si m = 2, est un résidu hydrocarbyle bifonctionnel, comprenant de 1 à 100 atomes de carbone ;
R², qui peut être identique ou différent si plus d'un tel groupe est présent, est un résidu hydrocarbyloxy comprenant de 1 à 100 atomes de carbone ;
R³, est -R⁴SiR¹ₚR²_{q}, où
p est égal à 0 à 3,
q est égal à 0 à 3,
à la condition que p + q est égal à 3, et
R⁴ est -(CH₂)ᵣYₛ(CH₂)ₜ- où r et t sont indépendamment égaux à 1 à 3, s est égal à 0 ou 1 et Y est un groupe hétéroatomique bifonctionnel choisi parmi -O-, -S-, -SO-, -SO₂-, -NH-, -NR¹- ou -PR¹-, où R¹ et R² sont tels que définis précédemment ; et
x est égal à 0 à 3, y est égal à 1 à 4, z est égal à 0 ou 1, à la condition que x + y
+ z = 4; et m = 1 ou 2
en tant qu'un agent d'homogénéisation de surface dans une composition comprenant une polyoléfine comprenant des groupes silanes hydrolysables et un acide de Brönsted en tant qu'un catalyseur de condensation au silanol.
